# DEMANDE DE BREVET EUROPEEN

(11) **EP 1 008 782 A1**
(43) Date de publication de la demande: **14.06.2000**
(21) Numéro de dépôt: 99403107.8
(22) Date de dépôt: 10.12.1999
(51) Int. Cl.: F16H 3/12

(54) **Procédé et dispositif de changement de vitesses pour véhicule automobile**

(30) Priorité: 11.12.1998 FR 9815660
(71) Demandeur: RENAULT, 92109 Boulogne-Billancourt (FR)
(72) Inventeur: Saint-Jean, Alain, 92290 Chatenay-Malabry (FR)

(57) **Abrégé**

Procédé de changement de vitesses pour véhicule automobile consistant à débrayer la transmission, à désolidariser d'un arbre de sortie (2, 3) de celle-ci un premier élément tournant de transfert du couple sur cet arbre, à synchroniser, puis à solidariser avec ledit arbre, un second élément de transfert de couple avant d'embrayer la transmission, caractérisé en ce qu'on utilise le même organe de synchronisation (29) pour tous les passages de vitesse montants, et le même organe de synchronisation (31) pour tous les passages descendants.

## Description

La présente invention se rapporte aux boîtes de vitesses à rapports étagés pour véhicules automobiles. Plus précisément, elle concerne une boîte de vitesses mécanique à arbres parallèles, du type appelé généralement "boîte de vitesses à engrenages", ou "boîte de vitesses à baladeurs".

Cette invention s'applique à un dispositif de changement de vitesses comportant, de façon classique, un arbre primaire ou arbre d'entrée de mouvement, relié par plusieurs descentes d'engrenages à un arbre secondaire (ou arbre de sortie de mouvement), dans le cas d'une boîte deux arbres, ou à deux arbres secondaires, dans le cas d'une boîte trois arbres.

Selon la disposition la plus courante dans le domaine, l'arbre primaire, porte une première série de pignons, dits pignons primaires, fixés sur celui-ci. Ces pignons tournent donc en permanence à la même vitesse que leur arbre, tandis que les autres pignons de la boîte, portés par le (ou les) arbre(s) secondaire(s), dits pignons secondaires, tournent fou sur leur arbre, l'un d'eux étant rendu solidaire de son arbre lors du passage d'une vitesse, de façon à transférer, de l'arbre d'entrée sur l'arbre de sortie, le mouvement reçu du moteur, selon le rapport de transmission choisi.

Pour changer de vitesse sur un véhicule équipé d'une telle boîte de vitesses, le conducteur doit effectuer successivement une série de manoeuvres, débrayage, changement de vitesses proprement dit, et embrayage, dont la répétition fréquente, par exemple en situation d'embouteillage, peut rapidement devenir pénible.

On connaît des boîtes de vitesses, dites robotisées, qui remédient à ce type de désagrément en confiant à un robot l'ensemble des opérations effectuées jusqu'alors par le conducteur. La "robotisation" de l'embrayage et des opérations de synchronisation et de crabotage des pignons fous sur un arbre de la boîte, engendre cependant un surcoût significatif par rapport à une boîte mécanique, même si la "boîte robotisée" reste une solution plus économique que la "boîte automatique" classique.

La présente invention vise à automatiser au meilleur coût une boîte de vitesse mécanique à engrenages, en réduisant le nombre d'éléments de commande actionnés à l'intérieur de celle-ci, pour changer de vitesse.

Elle propose dans ce but d'utiliser le même organe de synchronisation pour tous les passages de vitesse montants, et le même organe de synchronisation pour tous les passages descendants.

Elle prévoit d'utiliser de préférence l'organe de synchronisation associé à l'élément tournant qui intervient sur le rapport le plus élevé de la transmission, pour tous les passages montants, et celui qui est associé à l'élément tournant intervenant sur le rapport le moins élevé de la transmission, pour tous les passages descendants.

L'invention propose également un dispositif de changement de vitesses pour véhicule automobile.

Ce dispositif ne comporte que deux organes de synchronisation, sollicités respectivement pour tous les passages montants, et pour tous les passages descendants.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 représente schématiquement l'architecture d'un dispositif de changement de vitesses conforme à l'invention, et
- les figures 2 et 3 illustrent le fonctionnement de ce dispositif.

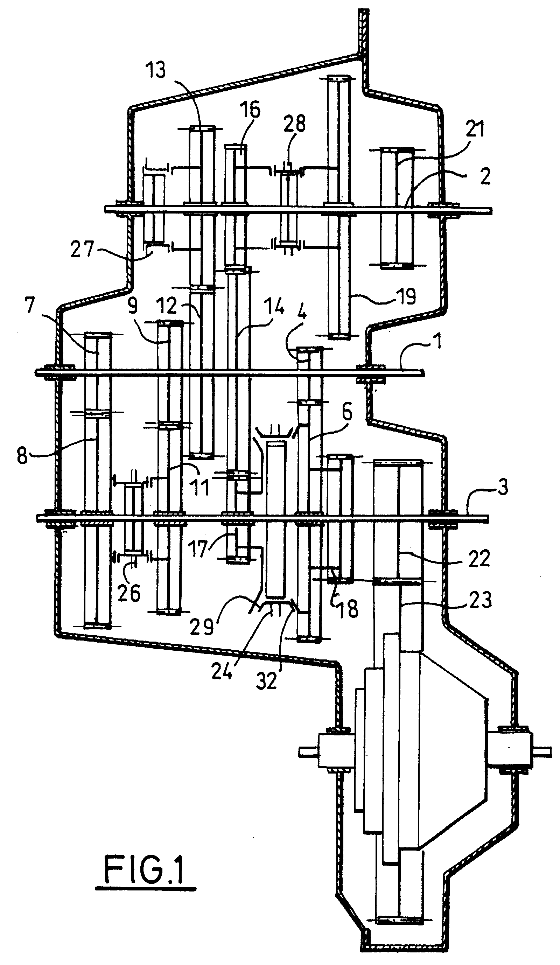

La figure 1 correspond à une boîte trois arbres, dont l'arbre d'entrée 1 reliée au moteur par un mécanisme d'embrayage non représenté, entraîne sélectivement deux arbres de sortie 2, 3, par l'intermédiaire de six descentes d'engrenages 4, 6 ; 7, 8 ; 9, 11 ; 12, 13 ; 14, 16 ; 14, 17, de façon à obtenir six rapports de marche avant, le rapport de marche arrière étant obtenu par l'intermédiaire de deux pignons secondaires de marche arrière 18, 19, dont le premier 18 est rapporté sur le pignon de première 6, et le second 19 tourne autour de l'arbre 2. Chaque arbre de sortie 2, 3 porte un pignon de sortie 21, 22 attaquant une même couronne de différentiel 23. Les pignons secondaires 6, 8, 11, 13, 16, 17 et 19, répartis entre les deux arbres secondaires 2, 3, sont associés à quatre baladeurs 24, 26, 27, 28, permettant respectivement de craboter les pignons secondaires de première 6 et de sixième 17 sur leur arbre 3, les pignons secondaires de seconde 8 et de troisième 11 sur ce même arbre 3, le pignon secondaire de quatrième 13 sur son arbre 2, et les pignons secondaires de cinquième 16 et de marche arrière 19 sur ce même arbre 2.

Conformément à ce schéma, la première et la sixième sont donc engagées à l'aide du même baladeur 24, et ce baladeur est le seul à être associé à des organes de synchronisation 29, 31, alors que les autres baladeurs 26, 27 et 28 en sont dépourvus. Les organes 29, 31, sont susceptibles d'accélérer ou de freiner les pignons secondaires de première et de sixième 6, 17), alors que les autres pignons secondaires ne disposent pas de synchroniseur propre.

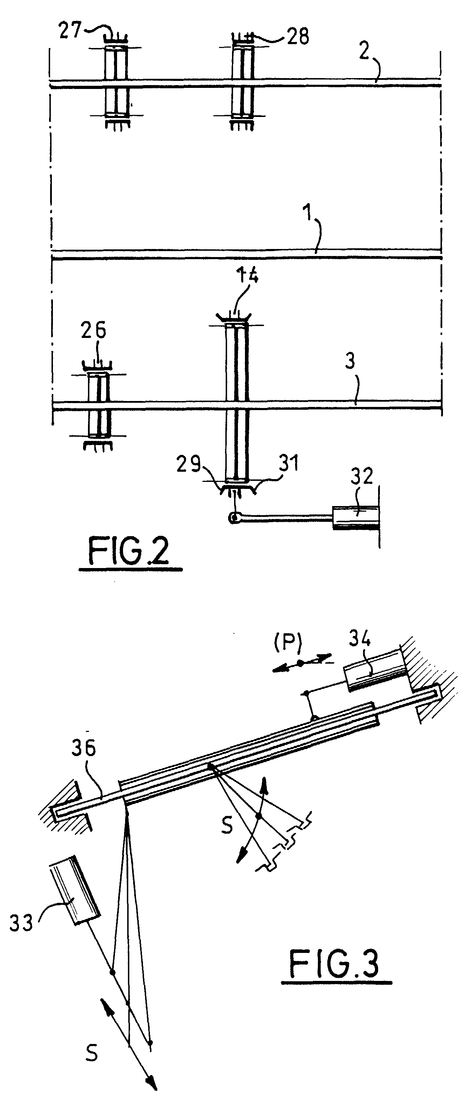

En se reportant aux figures 2 et 3, on note que la boîte est munie de trois actionneurs électriques ou électrohydrauliques 32, 33, 34. Un premier actionneur 32, pilote le baladeur de première et sixième 24, pour assurer les fonctions suivantes :
- crabotage du pignon fou de première 6,
- crabotage du pignon fou de sixième 17, et
- pilotage des deux synchroniseurs 29, 31.

Un second actionneur 33 déplace en rotation un axe de commande interne 36 de la boîte, de façon à sélectionner (S) les fourchettes de seconde-troisième, de quatrième ou de cinquième-marche arrière. Enfin, un troisième actionneur 34, ou actionneur de passage (P), déplace en translation l'axe 36, de façon à piloter, par l'intermédiaire de ces fourchettes, le crabotage des rapports de seconde, troisième, quatrième, cinquième et marche-arrière.

Le dispositif de changement de vitesses décrit ci-dessus à titre d'exemple non limitatif de réalisation de l'invention, comporte donc un arbre d'entrée de mouvement 1 portant des pignons primaires 4, 7, 9, 12, 14, relié par six descentes d'engrenages 4, 6 ; 7, 8 ; 9,11 ;12, 13 ;14, 16 ; 14, 17, à deux arbres de sortie de mouvement 2, 3 portant les pignons secondaires 8, 11, 12, 13, 14, 16, 17, 17. Toutefois, sans sortir du cadre de l'invention, les mesures proposées s'appliquent dans les mêmes conditions à toute boîte munie d'un seul ou de deux arbres secondaires, et/ou d'au moins trois descentes d'engrenages.

Conformément à l'invention, la boîte ne comporte cependant que deux organes synchronisation 29, 31, sollicités respectivement pour tous les passages montants et pour tous les passages descendants. Comme indiqué ci-dessus, ces deux organes coopèrent respectivement avec le pignon secondaire 17 du rapport le plus élevé (sixième) et avec le pignon secondaire 6 du rapport le moins élevé. Ils peuvent avantageusement être pilotés par le même actionneur 32. Les fonctions de sélection, de synchronisation et de passage de chaque rapport sont également pilotées, l'ensemble des opérations de commande interne de la boîte étant assurées, dans l'exemple illustré par les figures, par les trois actionneurs 32, 33, 34 placés sous le contrôle d'un calculateur non représenté.

Les changements de rapport (y compris le passage point mort-première et point mort-arrière) s'effectuent selon la séquence suivante, sous le contrôle du calculateur :
- débrayage,
- décrabotage du rapport,
- freinage de toutes les pièces tournantes de la boîte, en utilisant le synchroniseur 29 associé au rapport le plus élevé de la transmission,
- sélection du futur rapport à enclencher (en temps masqué par rapport au freinage des pièces tournantes),
- crabotage du nouveau rapport lorsque la vitesse de synchronisme est atteinte, et
- embrayage.

Lors des passages descendants, la séquence est analogue, mais c'est le synchroniseur 31 associé au pignon fou de première 6 qui est utilisé, cette fois pour accélérer toutes les pièces tournantes de la boîte, afin d'atteindre le bon régime de synchronisme du nouveau rapport.

L'invention propose donc de n'utiliser que deux organes de synchronisation pour tous les passages de vitesses, à savoir un premier organe de synchronisation pour tous les passages montants, et un second organe de synchronisation pour tous les passages descendants.

De préférence, c'est l'organe de synchronisation associé à l'élément tournant qui intervient sur le rapport le plus élevé de la transmission, qui est utilisé pour les rapports montants, et l'organe de synchronisation associé à l'élément tournant qui intervient sur le rapport le moins élevé de la transmission, qui est utilisé pour tous les rapports descendants. Cependant, en variante, les organes de synchronisation communs peuvent être associés au pignon fou d'un rapport intermédiaire, on peut également conserver, pour les pignons fous des rapports intermédiaires, un synchroniseur de faible capacité, afin de faciliter le crabotage des rapports.

L'invention prévoit également que la synchronisation de tous les rapports soit réalisée en mesurant la vitesse de rotation de l'arbre de sortie, de façon à solidariser avec cet arbre le pignon fou correspondant au rapport choisi, lorsqu'il tourne à la même vitesse que celui-ci.

En conclusion, l'exemple de réalisation de l'invention décrit ci-dessus, relatif à un dispositif de changement de vitesses à deux arbres de sortie, avec un rapport de marche arrière et six rapports de marche avant, n'a aucun caractère limitatif, quant à la portée de l'invention. Par ailleurs, la boîte concernée peut aussi bien être une boîte longitudinale que transversale, pourvu qu'elle comporte un arbre d'entrée de mouvement relié, par au moins trois descentes d'engrenages, à au moins un arbre de sortie de mouvement.

Enfin, il faut souligner que le fait d'utiliser un synchroniseur placé sur le pignon fou associé au rapport le plus élevé pour tous les passages montants, permet de réaliser un gain substantiel sur le transfert d'inertie, donc sur le temps de passage.

## Revendications

1. Procédé de changement de vitesses pour véhicule automobile consistant à débrayer la transmission, à désolidariser d'un arbre de sortie (2, 3) de celle-ci un premier élément tournant de transfert du couple sur cet arbre, à synchroniser, puis à solidariser avec ledit arbre, un second élément de transfert de couple avant d'embrayer la transmission, caractérisé en ce qu'on utilise le même organe de synchronisation (29) pour tous les passages de vitesse montants, et le même organe de synchronisation (31) pour tous les passages descendants.

2. Procédé de passage selon la revendication 1, caractérisé en ce qu'on utilise un organe de synchronisation (29) associé à l'élément tournant intervenant sur le rapport le plus élevé pour freiner les pièces tournantes de la transmission, lors de tous les passages montants.

3. Procédé de passage selon la revendication 1 ou 2, caractérisé en ce qu'on utilise un organe de synchronisation (31) associé à l'élément tournant qui intervient sur le rapport le moins élevé, pour accélérer les pièces tournantes de la transmission, lors de tous les passages descendants.

4. Procédé de passage selon la revendication 1, 2 ou 3, caractérisé en ce qu'on mesure la vitesse de rotation de l'arbre de sortie (2, 3) supportant le second élément, de façon à solidariser ledit arbre et ledit élément lorsqu'ils tournent à la même vitesse.

5. Dispositif de changement de vitesses pour véhicule automobile comportant un arbre d'entrée de mouvement (1) portant des pignons primaires (4, 7, 9,12, 14) relié par au moins trois descentes d'engrenages à au moins un arbre de sortie de mouvement (2, 3) portant des pignons secondaires (6, 8, 11, 13, 16, 17), caractérisé en ce qu'il ne comporte que deux organes de synchronisation (29, 31), sollicités respectivement pour tous les passages montants et pour tous les passages descendants.

6. Dispositif de changement selon la revendication 5, caractérisé en ce que les deux organes de synchronisation (29, 31) coopèrent respectivement avec le pignon secondaire (17) du rapport le plus élevé et avec le pignon secondaire (6) du rapport le moins élevé.

7. Dispositif de changement de vitesses selon la revendication 5 ou 6, caractérisé en ce que les deux organes de synchronisation (29, 31) sont actionnés par le même actionneur (32).

8. Dispositif de changement de vitesses selon la revendication 5, 6 ou 7, caractérisé en ce que la commande des fonctions de sélection, de synchronisation et de passage de chaque rapport est pilotée.

9. Dispositif de changement de vitesses selon la revendication 8, caractérisé en ce qu'il comporte un premier actionneur (32) de commande des deux organes de synchronisation (29, 31), un second actionneur (33) de sélection des lignes de vitesses, et troisième actionneur (34) de passage des vitesses.

10. Dispositif de changement de vitesses selon l'une des revendications selon l'une des revendications 5 à 8, caractérisé en ce qu'il présente deux arbres de sortie (2, 3), et qu'il dispose d'un rapport de marche arrière et de six rapports de marche avant.
